# FASCICULE DE BREVET EUROPEEN

(11) **EP 3 384 818 B1**
(45) Date de publication et mention de la délivrance du brevet: **29.01.2020**
(21) Numéro de dépôt: 18165537.4
(22) Date de dépôt: 03.04.2018
(51) Int. Cl.: A47J 37/06

(54) **DISPOSITIF DE CUISSON EN EXTERIEUR**
VORRICHTUNG ZUM KOCHEN IM FREIEN
OUTDOOR COOKING DEVICE

(30) Priorité: 06.04.2017 FR 1753005
(43) Date de publication de la demande: 10.10.2018
(73) Titulaire: SEB S.A., 69130 Ecully (FR)
(72) Inventeur: DEVIS, Vincent, 73410 ENTRELACS (FR); BESSON, Jean-Christophe, 74600 SEYNOD (FR); TOUCHARD, Rodolphe, 74150 RUMILLY (FR)
(74) Mandataire: Soares, Luis Filipe

(56) Documents cités:
- FR-A- 849 269
- FR-A1- 2 491 317

## Description

La présente invention concerne de manière générale un dispositif de cuisson en extérieur, autrement appelé barbecue.

Il est connu dans l'art antérieur des dispositifs de cuisson en extérieur, tel que celui divulgué dans le document FR2491317. Ce dispositif comprend une armature métallique formant à la fois la structure porteuse du dispositif ainsi que la grille pour recevoir les aliments. Le dispositif comprend également un bac solidaire de l'armature. La résistance électrique est placée sous la grille par l'intermédiaire de support solidaire de la grille. Ce type de dispositif est laborieux à nettoyer.

Il existe d'autres types de dispositifs de cuisson en extérieur comprenant une cuve externe. Pour maintenir la grille et/ou la résistance électrique dans la cuve des bossages/épaulements sont réalisés dans la cuve externe. Sur d'autres dispositifs de cuisson en extérieur des supports sont fixés sur la surface interne de la cuve externe.

Un but de la présente invention est de répondre aux inconvénients de l'art antérieur mentionné ci-dessus et en particulier, en proposant un dispositif de cuisson en extérieur très facile à nettoyer.

Pour cela un premier aspect de l'invention concerne un dispositif de cuisson en extérieur, comprenant :
- des moyens de réception amovibles, agencés pour supporter des aliments à cuire,
- des moyens de chauffage amovibles, agencés pour fournir une chaleur de cuisson,
- une cuve externe formée par une paroi, recevant les moyens de réception et les moyens de chauffage, et dont une surface interne de la paroi est agencée pour être exposée à des jus de cuisson,
- des moyens d'appui, agencés pour reposer sur un plan d'appui au sol,
caractérisé en ce que le dispositif comprend une pluralité de supports montés de façon amovible sur la cuve externe, chaque support comprend une zone d'appui des moyens de réception et une zone d'appui des moyens de chauffage. On comprend que dans la mesure où les supports sont amovibles, il est possible de les démonter lors du nettoyage de la cuve externe. Celle-ci, se trouve alors exempte de saillie ou renfoncement laborieux à nettoyer.

Selon un autre mode de réalisation, la pluralité de supports sont montés de façon amovible directement sur la cuve externe.

Selon un autre mode de réalisation, la zone d'appui des moyens de réception est distincte de la zone d'appui des moyens de chauffage.

Selon un autre mode de réalisation, chaque support comprend des moyens de fixation coopérant avec des moyens de fixation de la cuve externe pour empêcher la rotation des supports par rapport à la cuve externe.

Selon un autre mode de réalisation, les moyens de fixation de la cuve externe comprennent une ouverture conformée pour assurer le passage des moyens de fixation du support selon une première orientation et le blocage des moyens de fixation du support sur la cuve externe selon une deuxième orientation.

Selon un autre mode de réalisation, la zone d'appui des moyens de réception comprend une surface plane sensiblement orthogonale à la cuve externe.

Selon un autre mode de réalisation, la zone d'appui des moyens de chauffage comprend une rainure sensiblement verticale.

Selon un autre mode de réalisation, chaque support comprend une première surface d'appui sur la surface intérieure de la cuve externe et une deuxième surface d'appui sur la surface extérieure de la cuve externe.

Selon un autre mode de réalisation, le dispositif comprend au moins 3 supports répartis sur la cuve externe dans un plan sensiblement parallèle au bord supérieur de la cuve externe.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :
- La figure 1 représente une vue partielle d'un dispositif de cuisson en extérieur selon l'invention, en coupe.
- La figure 2 représente une vue de dessus de la cuve externe du dispositif de cuisson.
- La figure 3 représente une vue de détail du dispositif de cuisson en extérieur.
- La figure 4 représente un support selon l'invention dans une position hors utilisation.
- La figure 5 représente un support selon l'invention dans une position en utilisation.

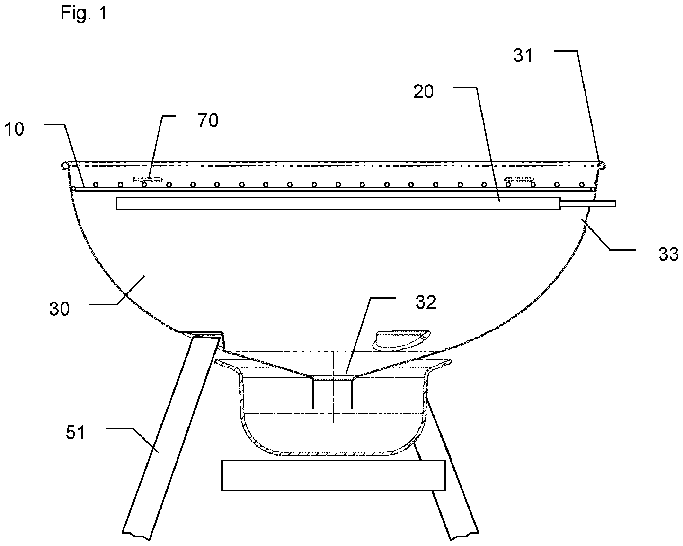

La figure 1 représente une vue partielle d'un dispositif de cuisson en extérieur qui comprend une cuve externe 30 de forme globalement hémisphérique dans laquelle se trouvent des moyens de réception 10, agencés pour recevoir des aliments à cuire, et des moyens de chauffage 20 agencés pour fournir une chaleur de cuisson.

Typiquement, les moyens de réception 10 sont une grille métallique, et dans le cas représenté, les moyens de chauffage 20 sont une résistance électrique agencée sous la grille formant les moyens de réception 10. Enfin, la cuve externe 30 présente ici un diamètre de 400 mm environ, choisi dans une plage pouvant aller de 250 mm à 600 mm.

La grille 10 et la résistance 20 électrique sont amovibles.

Le dispositif de cuisson en extérieur peut avantageusement comprendre un capot amovible (non représenté), pour former avec la cuve externe 30 un espace de cuisson clos, c'est-à-dire un four.

Des pieds 51 sont prévus pour positionner la cuve externe 30, par rapport à un habillage par exemple en plastique ou sur le sol formant un plan d'appui.

Lors de la cuisson, des jus de cuisson sont générés par les aliments à cuire et tombent par gravité sur la surface interne de la paroi de la cuve externe 30. Ces jus de cuisson comprennent des graisses liquéfiées par la chaleur, et sont évacuées par un trou d'évacuation 32, ménagé dans le fond de la cuve externe 30.

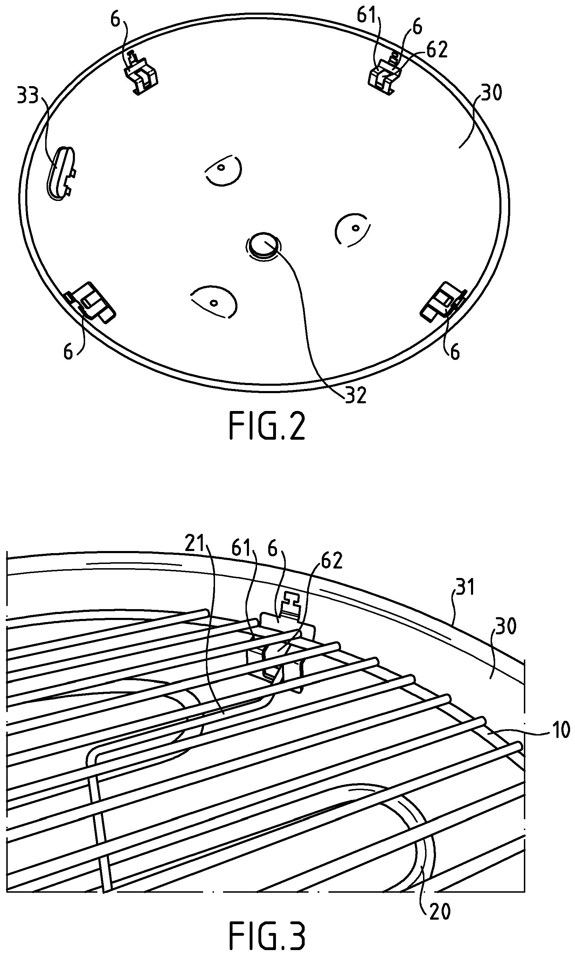

Selon le mode de réalisation présenté, la résistance 20 chauffante et la grille 10 sont montées sur des supports 6 répartis sur la cuve externe 30. Ces supports 6 assurent le positionnement de la grille 10 et de la résistance 20 chauffante sensiblement parallèle au plan du sol sur lequel repose le dispositif de cuisson. Selon la variante de réalisation représentée figure 2, quatre supports 6 répartis régulièrement sur la surface interne de la cuve externe 30 assurent le maintien des 2 éléments. Les supports 6 sont par exemple positionnés sur la cuve externe 30 dans un plan sensiblement parallèle au bord 31 supérieur de la cuve externe

Une ouverture 33 pratiquée dans la cuve externe 30 sensiblement au même niveau que les supports 6 assure le passage de moyens de connexion de la résistance électrique.

Selon l'une des caractéristiques de l'invention, les supports 6 sont amovibles. Ceci permet notamment de faciliter le nettoyage de la cuve externe 30. En effet, lors du nettoyage, il est possible de retirer la grille 10, la résistance 20 et les supports 6 ce qui laisse la surface interne de la cuve externe 30 libre de tout obstacle pour le nettoyage.

Comme le montre la fig. 3, chaque support 6 comprend une zone d'appui 61 pour la grille 10 et une zone d'appui 62 pour la résistance 20. Selon le mode de réalisation présenté aux figures, la résistance 20 comprend une armature métallique 21 qui vient en appui sur la zone d'appui 62 correspondante de chaque support 6. Cette zone d'appui 62 de la résistance comprend une rainure sensiblement verticale. Lors de la mise en place de la résistance 20 chauffante, l'armature métallique 21 vient s'engager dans la rainure 62 et prend appui sur le fond de la rainure.

La zone d'appui 61 de la grille est une surface plane 61 sensiblement orthogonale à la cuve externe 30.

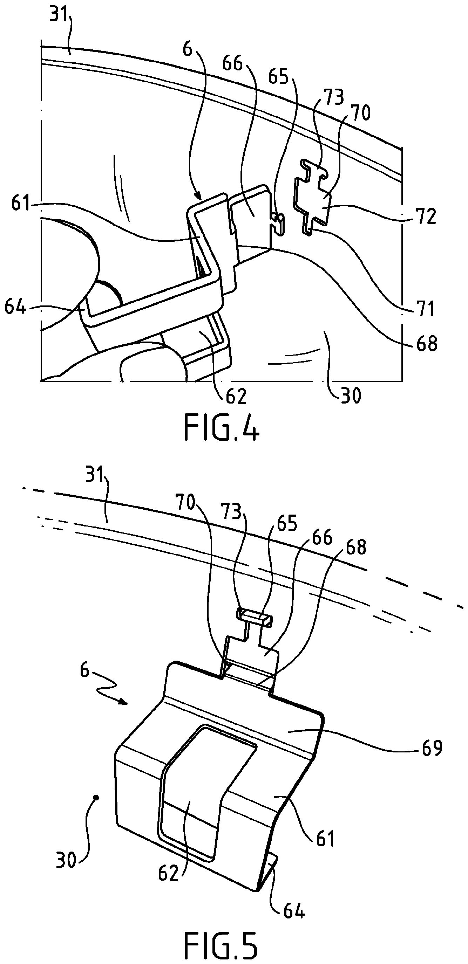

Le support 6 va être décrit plus en détail en référence aux figures 4 et 5. Selon le mode de réalisation représenté, le support est réalisé à partir d'une plaque de métal découpée et pliée pour former les différentes zones d'appuis 61, 62 et des moyens 65, 66, 68 de fixation sur la cuve externe 30. Ainsi, la rainure 62 est formée sensiblement au centre de la plaque par l'intermédiaire d'une ouverture sensiblement rectangulaire. La plaque est ensuite pliée selon un angle droit sensiblement au milieu de l'ouverture rectangulaire de la plaque. Cette opération crée la rainure 62 sensiblement verticale ainsi que la surface plane 61 correspondant à la zone d'appui 61 de la grille. La longueur de la rainure 62 définit la distance entre la grille 10 et la résistance 20 chauffante.

Au niveau des extrémités de la rainure 62, la plaque est à nouveau pliée pour former 2 zones d'appui 69, 64 du support 6 sur la surface interne de la cuve externe 30.

La première zone d'appui 69 du support 6 sur la cuve externe 30 est située au-dessus de la zone d'appui 61 de la grille 10. La deuxième zone d'appui 64 du support 6 sur la cuve externe 30 est située au-dessus de la rainure 62. Ces 2 zones d'appui 69, 64 contre la cuve externe permettent de reprendre au moins en partie les efforts générés par le poids de la grille 10, de la résistance 20 et des aliments présents sur la grille 10.

Chaque support 6 comprend également les moyens de fixation 65, 66, 68 sur la cuve externe 30. Pour ce faire la cuve externe 30 comprend des moyens de fixation 70, 71, 72, 73 correspondants. Selon l'invention, les moyens de fixation 70, 71 , 72, 73 de la cuve externe et les moyens de fixation 65, 66, 68 de chaque support 6 coopèrent de sorte à empêcher la rotation des supports 6 par rapport à la cuve externe 30 lorsque ceux-ci sont montés sur la cuve externe 30.

Pour ce faire, les moyens de fixation 65, 66, 68 du support 6 comprennent une surface plane 66 d'appui sur la surface extérieure de la cuve externe 30, un ergot 65 de verrouillage et une liaison 68 entre la surface plane 66 d'appui et le reste du support 6. Les moyens de fixation 70, 71, 72, 73 de la cuve externe 30 comprennent une ouverture 70 ou découpe dont la forme permet le passage de la surface plane 66 d'appui, l'ergot 65 de verrouillage et la liaison 68 lorsqu'ils sont selon une première orientation et le blocage de la surface plane 66 d'appui, l'ergot 65 de verrouillage et la liaison 68 selon une deuxième orientation.

En fait, l'ouverture 70 comprend une fente 71 dont les dimensions assurent le passage de la surface plane 66 d'appui, l'ergot 65 de verrouillage et la liaison 68 lorsque le support 6 est orienté de sorte que la rainure 62 est sensiblement horizontale et orthogonale à la cuve externe 30. L'ouverture 70 comprend également une découpe 72 sensiblement rectangulaire dont les dimensions permettent la rotation du support 6 selon l'axe transversal de la rainure 62 lorsque la surface plane 66 d'appui, l'ergot 65 de verrouillage et la liaison 68 sont engagés au travers de l'ouverture 70 et que la zone de liaison se situe sensiblement au niveau de l'ouverture 70.

L'ouverture 70 comprend également une rainure 73 dont les dimensions correspondent sensiblement aux dimensions de l'ergot 65.

Le montage d'un support 6 sur la cuve externe 30 s'effectue de la façon suivante :
- le support 6 est positionné selon une première orientation dans laquelle la rainure 62 est sensiblement horizontale et orthogonale à la cuve externe 30.
- la surface plane 66 d'appui, l'ergot 65 de verrouillage et la liaison 68 sont introduits dans l'ouverture 70 en passant par la fente 71.
- Le support est tourné d'un quart de tour selon un axe sensiblement horizontal.
- Le support est basculé vers le bas de sorte que les 2 zones d'appui 69, 64 du support 6 viennent sur la surface interne de la cuve externe 30.

Dans cette position, représentée figure 5, la liaison 68 du support 6 est en appui sur la périphérie de la découpe 72 sensiblement rectangulaire de l'ouverture et l'ergot 65 engagé dans la rainure 73 de l'ouverture 70 ce qui interdit la rotation du support 6 par rapport à la cuve externe 30.

Par ailleurs, la surface plane 66 d'appui est en contact avec la surface extérieure de la cuve externe 30. On peut noter que dans cette position aucune portion du support 6 ne fait saillie de la surface extérieure de la cuve externe.

Le démontage des supports 6 s'effectue en réalisant les mêmes étapes mais dans l'ordre inverse.

Ces procédures de montage et de démontage permettent d'une part d'assurer un maintien du support 6 sur la cuve externe 30 et d'autre part de réduire les risques de pertes des supports 6. En effet, même dans le cas où la cuve externe 30 serait nettoyée en laissant les supports 6 en place les mouvements de la cuve externe 30 ne pourront pas reproduire exactement les différentes étapes ci-dessus ce qui garantit le maintien des supports 6 sur la cuve externe 30.

Par contre, on comprend que lorsque les supports 6 sont retirés, le nettoyage de la cuve externe est facilité.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de cuisson en extérieur, comprenant :
- des moyens de réception (10) amovibles, agencés pour supporter des aliments à cuire,
- des moyens de chauffage (20) amovibles, agencés pour fournir une chaleur de cuisson,
- une cuve externe (30) formée par une paroi, recevant les moyens de réception (10) et les moyens de chauffage (20), et dont une surface interne de la paroi est agencée pour être exposée à des jus de cuisson,
- des moyens d'appui, agencés pour reposer sur un plan d'appui au sol,
**caractérisé en ce que** le dispositif comprend une pluralité de supports (6) montés de façon amovible sur la cuve externe (30), chaque support (6) comprend une zone d'appui (61) des moyens de réception et une zone d'appui (62) des moyens de chauffage (20).

2. Dispositif de cuisson en extérieur selon la revendication précédente, dans lequel chaque support (6) comprend des moyens (65, 66, 68) de fixation coopérant avec des moyens (70, 71, 72, 73) de fixation de la cuve externe (30) pour empêcher la rotation des supports (6) par rapport à la cuve externe (30).

3. Dispositif de cuisson en extérieur selon la revendication précédente, dans lequel les moyens de fixation (70, 71, 72, 73) de la cuve externe (30) comprennent une ouverture (70) conformée pour assurer le passage des moyens (65, 66, 68) de fixation du support (6) selon une première orientation et le blocage des moyens (65, 66, 68) de fixation du support (6) sur la cuve externe (30) selon une deuxième orientation.

4. Dispositif de cuisson en extérieur selon l'une des revendications précédentes, dans lequel la zone d'appui (61) des moyens de réception (10) comprend une surface plane sensiblement orthogonale à la cuve externe (30).

5. Dispositif de cuisson en extérieur selon l'une des revendications précédentes, dans lequel la zone d'appui (62) des moyens de chauffage (20) comprend une rainure (62) sensiblement verticale.

6. Dispositif de cuisson en extérieur selon l'une des revendications précédentes, dans lequel chaque support (6) comprend une première surface d'appui (69) sur la surface intérieure de la cuve externe (30) et une deuxième surface d'appui (66) sur la surface extérieure de la cuve externe (30).

7. Dispositif de cuisson en extérieur selon l'une des revendications précédentes, **caractérisé en ce qu'**il comprend au moins 3 supports (6) répartis sur la cuve externe (30) dans un plan sensiblement parallèle au bord (31) supérieur de la cuve externe (30).

## Patentansprüche

1. Vorrichtung zum Kochen im Freien, umfassend:
- abnehmbare Aufnahmemittel (10), die eingerichtet sind, die zu kochenden Nahrungsmittel zu tragen,
- abnehmbare Heizmittel (20), die eingerichtet sind, eine Kochwärme bereitzustellen,
- ein äußeres Gefäß (30), das durch eine Wand gebildet ist, das die Aufnahmemittel (10) und die Heizmittel (20) aufnimmt, und von dem eine innere Oberfläche der Wand eingerichtet ist, um den Kochsäften ausgesetzt zu sein,
- Auflagemittel, die eingerichtet sind, um auf einer Auflageebene auf dem Boden aufzuliegen,
**dadurch gekennzeichnet, dass** die Vorrichtung eine Vielzahl von an dem äußeren Gefäß (30) abnehmbar angebrachten Trägern (6) umfasst, wobei jeder Träger (6) einen Auflagebereich (61) der Aufnahmemittel und einen Auflagebereich (62) der Heizmittel (20) umfasst.

2. Vorrichtung zum Kochen im Freien nach dem vorstehenden Anspruch, wobei jeder Träger (6) Mittel (65, 66, 68) zur Befestigung umfasst, die mit Mitteln (70, 71, 72, 73) zur Befestigung des äußeren Gefäßes (30) zusammenwirken, um ein Verdrehen der Träger (6) gegenüber dem äußeren Gefäß (30) zu verhindern.

3. Vorrichtung zum Kochen im Freien nach dem vorstehenden Anspruch, wobei die Mittel zur Befestigung (70, 71, 72, 73) des äußeren Gefäßes (30) eine Öffnung (70) umfassen, die angepasst ist, um den Durchgang der Mittel (65, 66, 68) zur Befestigung des Trägers (6) in einer ersten Ausrichtung und zur Blockierung der Mittel (65, 66, 68) zur Befestigung des Trägers (6) an dem äußeren Gefäß (30) in einer zweiten Ausrichtung zu gewährleisten.

4. Vorrichtung zum Kochen im Freien nach einem der vorstehenden Ansprüche, wobei der Auflagebereich (61) der Aufnahmemittel (10) eine ebene Oberfläche umfasst, die im Wesentlichen orthogonal zum dem äußeren Gefäß (30) ist.

5. Vorrichtung zum Kochen im Freien nach einem der vorstehenden Ansprüche, wobei der Auflagebereich (62) der Heizmittel (20) eine Nut (62) umfasst, die im Wesentlichen vertikal ist.

6. Vorrichtung zum Kochen im Freien nach einem der vorstehenden Ansprüche, wobei jeder Träger (6) eine erste Auflagefläche (69) auf der inneren Oberfläche des äußeren Gefäßes (30) und eine zweite Auflagefläche (66) auf der äußeren Oberfläche des äußeren Gefäßes (30) umfasst.

7. Vorrichtung zum Kochen im Freien nach einem der vorstehenden Ansprüche, **dadurch gekennzeichnet, dass** sie mindestens 3 Träger (6) umfasst, die auf dem äußeren Gefäß (30) in einer Ebene im Wesentlichen parallel zu der oberen Kante (31) des äußeren Gefäßes (30) verteilt sind.

## Claims

1. Outdoor cooking device, comprising:
- removable receiving means (10), arranged to support food to be cooked,
- removable heating means (20), arranged to supply heat for cooking,
- an outer container (30) formed by a wall, taking the receiving means (10) and the heating means (20), and of which one inner surface of the wall is arranged to be exposed to cooking juices,
- support means, arranged to rest on a bearing plane on the ground,
**characterised in that** the device comprises a plurality of supports (6) mounted removably on the outer container (30), each support (6) comprises a support area (61) for the receiving means and a support area (62) for the heating means (20).

2. Outdoor cooking device according to the previous claim, in which each support (6) comprises fastening means (65, 66, 68) cooperating with the fastening means (70, 71, 72, 73) of the outer container (30) to prevent the rotation of the supports (6) in relation to the outer container (30).

3. Outdoor cooking device according to the previous claim, in which the fastening means (70, 71, 72, 73) of the outer container (30) comprise an opening (70) shaped to ensure the passing of the fastening means (65, 66, 68) of the support (6) in a first orientation and the blocking of the fastening means (65, 66, 68) of the support (6) onto the outer container (30) in a second orientation.

4. Outdoor cooking device according to any one of the previous claims, in which the support area (61) for the receiving means (10) comprises a flat surface substantially orthogonal to the outer container (30).

5. Outdoor cooking device according to any one of the previous claims, in which the support area (62) for the heating means (20) comprises a substantially vertical groove (62).

6. Outdoor cooking device according to any one of the previous claims, in which each support (6) comprises a first support surface (69) on the inner surface of the outer container (30) and a second support surface (66) on the outer surface of the outer container (30).

7. Outdoor cooking device according to any one of the previous claims, **characterised in that** it comprises at least 3 supports (6) distributed on the outer container (30) in a plane substantially parallel to the top edge (31) of the outer container (30).
